# EUROPEAN PATENT APPLICATION

(11) **EP 4 836 576 A1**
(43) Date of publication of application: **04.11.2026**
(21) Application number: 26172236.7
(22) Date of filing: 14.04.2026
(51) Int. Cl.: H04W 74/0816, H04L 5/00, H04W 84/12

(54) **MEDIUM SYNCHRONIZATION FOR NON-PRIMARY CHANNEL ACCESS CAPABLE STATIONS**

(30) Priority: 28.04.2025 US 202519191832
(71) Applicant: Nokia Technologies Oy, 02610 Espoo (FI)
(72) Inventor: TALARICO, Salvatore, Sunnyvale (US); DOPPLER, Klaus Franz, Albany (US); KASSLIN, Mika, Espoo (FI); JOHNSSON, Kerstin, Palo Alto (US)
(74) Representative: Nokia EPO representatives

(57) **Abstract**

Various example embodiments relate to apparatuses, methods, and computer readable media for wireless medium synchronization for non-primary channel access, NPCA, capable stations. An apparatus may comprise at least one processor and at least one memory. The at least one memory may store instructions that, when executed by the at least one processor, cause the apparatus at least to switch from a basic service set, BSS, primary channel to an NPCA primary channel in response to the BSS primary channel being occupied by an overlapping basic service set, OBSS, transmission, to switch back to the BSS primary channel after residing on the NPCA primary channel for a time period, and to perform a medium access recovery procedure in response to switching back to the BSS primary channel.

## Description

### TECHNICAL FIELD

Various example embodiments described herein generally relate to communication technologies, and more particularly, to apparatuses, methods, and computer readable media for wireless medium synchronization for non-primary channel access (NPCA) capable stations (STAs).

### BACKGROUND

This section is intended to provide a background or context to example embodiments of the present disclosure. The description herein may include concepts that could be pursued, but are not necessarily ones that have been previously conceived or pursued. Therefore, unless otherwise indicated herein, what is described in this section is not prior art to the description and claims of the present disclosure and is not admitted to be prior art by inclusion in this section.

Institute of Electrical and Electronics Engineers (IEEE) 802.11bn, also known as Ultra High Reliability (UHR) or Wi-Fi 8, is a task group working on a specification that will significantly reduce latencies for Wi-Fi stations (STAs) running latency-sensitive applications such as Augmented Reality (AR), Virtual Reality (VR) and Mixed Reality (MR). One of the main limitations of IEEE 802.11's current design is its limited reliability and non-deterministic channel access. In this context, IEEE 802.11bn has introduced a proposal for non-primary channel access (NPCA), which allows stations to move to an idle secondary channel when a primary channel of a basic service set (BSS) is occupied by an overlapping BSS (OBSS) or other transmissions.

### SUMMARY

A brief summary of example embodiments is provided below to provide basic understanding of some aspects of various embodiments. It should be noted that this summary is not intended to identify key features of essential elements or define scopes of the embodiments, and its sole purpose is to introduce some concepts in a simplified form as a preamble for a more detailed description provided below.

In a first aspect, an example embodiment of an apparatus is provided. The apparatus may comprise at least one processor and at least one memory. The at least one memory may store instructions that, when executed by the at least one processor, cause the apparatus at least to switch from a basic service set (BSS) primary channel to a non-primary channel access (NPCA) primary channel in response to the BSS primary channel being occupied by an overlapping basic service set (OBSS) transmission, to switch back to the BSS primary channel after residing on the NPCA primary channel for a time period, and to perform a medium access recovery procedure in response to switching back to the BSS primary channel.

In a second aspect, an example embodiment of a method is provided. The method may comprise switching from a BSS primary channel to an NPCA primary channel in response to the BSS primary channel being occupied by an OBSS transmission, switching back to the BSS primary channel after residing on the NPCA primary channel for a time period, and performing a medium access recovery procedure in response to switching back to the BSS primary channel.

Other features and advantages of the example embodiments of the present disclosure will also be apparent from the following description of specific embodiments when read in conjunction with the accompanying drawings, which illustrate, by way of example, the principles of example embodiments of the present disclosure.

### BRIEF DESCRIPTION OF THE DRAWINGS

Some example embodiments are described, by way of non-limiting examples, with reference to the accompanying drawings.
Figs. 1A, 1B and 1C are schematic diagrams illustrating some examples of an environment in which example embodiments of the present disclosure may be implemented.
Fig. 2 is a schematic diagram illustrating an example of a non-primary channel access (NPCA).
Fig. 3A is a schematic diagram illustrating an example of an environment including overlapping basic service sets (OBSSs).
Fig. 3B is a schematic diagram illustrating an example of medium synchronization loss during NPCA in the environment shown in Fig. 3A.
Fig. 4A is a schematic diagram illustrating an example of an environment including overlapping basic service sets (OBSSs).
Fig. 4B is a schematic diagram illustrating an example of medium synchronization loss during NPCA in the environment shown in Fig. 4A.
Fig. 5 is a flowchart illustrating a method according to an example embodiment of the present disclosure.
Fig. 6 is a flowchart illustrating a method according to an example embodiment of the present disclosure.
Fig. 7A-7D are flowcharts illustrating methods according to example embodiments of the present disclosure.
Fig. 8 is a flowchart illustrating a method according to an example embodiment of the present disclosure.
Fig. 9 is a schematic block diagram illustrating an apparatus according to an example embodiment of the present disclosure.

Throughout the drawings, same or similar reference numbers indicate same or similar elements. A repetitive description on the same elements would be omitted.

### DETAILED DESCRIPTION

Herein below, some example embodiments are described in detail with reference to the accompanying drawings. The following description includes specific details for the purpose of providing a thorough understanding of various concepts. However, it will be apparent to those skilled in the art that these concepts may be practiced without these specific details. In some instances, well known circuits, techniques and components are shown in block diagram form to avoid obscuring the described concepts and features.

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Example embodiments of the present disclosure may be applied to various wireless communication networks. For example, some example embodiments may be applied to wireless local area networks (WLANs), such as Wi-Fi networks based on the IEEE 802.11a/b/g/n/ac/ax standards. In addition, some example embodiments may also be applied to Wi-Fi networks based on the newly proposed IEEE 802.11be (also known as Wi-Fi 7) and 802.11bn standards or future standards. It would be appreciated that the example embodiments may also be applied to Wi-Fi networks based on enhancements to the IEEE 802.11a/b/g/n/ac/ax/be/bn standards. Some example embodiments may be applied to mobile communication networks, such as cellular communication networks based on the third generation project partnership (3GPP) standards for Long Term Evolution (LTE, also known as 4G), New Radio (NR, also known as 5G) or future networks. Just for simplicity of description, Wi-Fi will be taken as an example in the description below. Given the rapid development in communication technologies, there will be future type communication technologies and networks with which the present disclosure may be embodied. It should not be seen as limiting the scope of the present disclosure to only the aforementioned examples of the wireless communication networks.

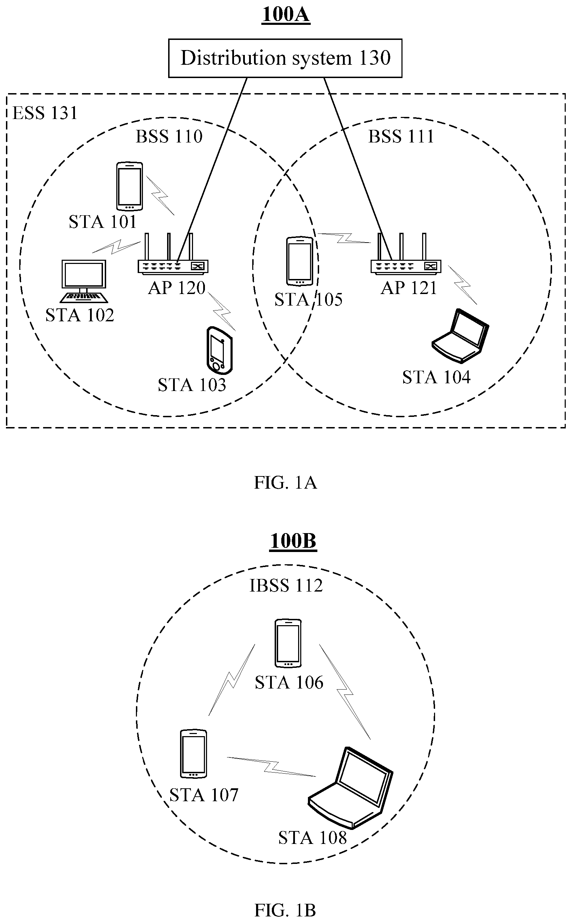

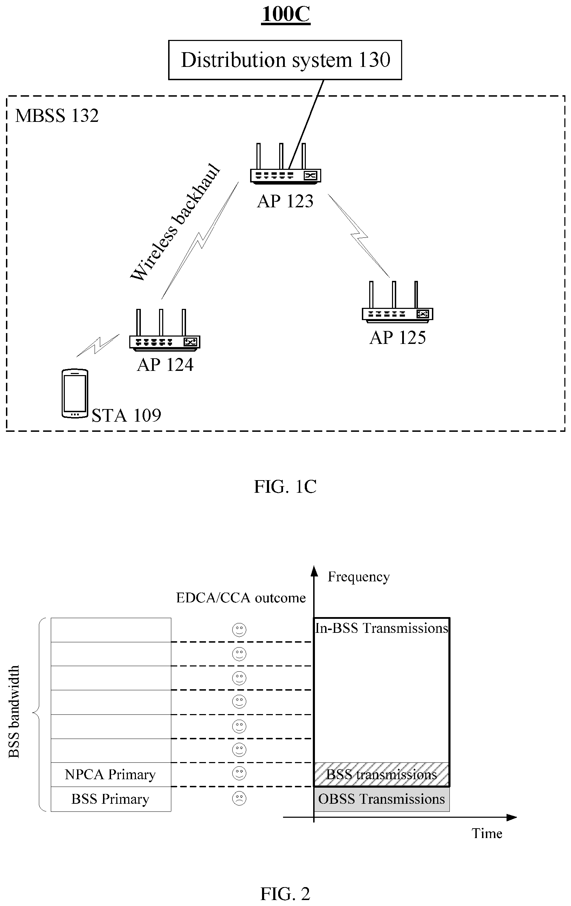

Figs. 1A, 1B and 1C illustrate some examples of an environment in which example embodiments disclosed herein may be implemented. For convenience of description, the environment will be described through basic service sets (BSSs). BSS is a concept in the IEEE 802.11 standard and it describes how a group of wireless devices are connected to each other and communicate with each other. In general, the BSS may be classified into an infrastructure BSS and an independent BSS (IBSS).

Referring to Fig. 1A first, the environment 100A may include one or more infrastructure BSSs 110, 111 (hereinafter, referred to as BSS). The BSS 110 may include an access point (AP) 120 that provides a distribution service, and one or more stations (STAs) 101, 102, 103 wirelessly connected to the access point 121. The BSS 111 may include an access point 121 and one or more stations 104, 105. The access points 120, 121 may be referred to as AP stations, and the stations 101-105 may be referred to as non-AP stations or clients. Each BSS has a single access point. The access point may advertise a service set identifier (SSID) which is the name of the BSS, and a basic service set identifier (BSSID) which is the medium access control (MAC) address of the access point. As shown in Fig. 1A, the access point may have a coverage area overlapping with a coverage area of another access point. A station (e.g., the station 105 shown in Fig. 1A) may receive multiple SSIDs/BSSIDs advertised from multiple access points (e.g., the access points 120, 121 shown in Fig. 1A) and select one (e.g., the access point 121 shown in Fig. 1A) that has a good radio link quality to join. The station may send an association request to the selected access point, and the access point may permit or deny the association request.

The access points 120, 121 may connect to a distribution system 130. The distribution system 130 may be an upstream wired network, and the BSSs 110, 111 may be considered as an extension of the wired network. The access points 120, 121 bridge the BSSs 110, 111 to the wired network, allowing traffic to flow from the BSSs to the wired network and vice versa. The BSSs 110, 111 can also communicate with each other through the distribution system 130. The BSSs 110, 111 connected through the distribution system 130 may be referred to as an extended service set (ESS) 131. The term "ESS" is used to indicate a network configured by connecting one or more BSSs (or APs) through a distribution system. The access points included in one ESS may have the same SSID and different BSSIDs. When the access points in the ESS have a coverage area overlapping with each other, a station may seamlessly roam from one access point to another access point. It would be appreciated that if the Wi-Fi networks are deployed in a large area such as a shopping mall, a university campus or a city, there may be more BSSs which may separate from or overlap with one another.

Fig. 1B illustrate an environment 100B which includes an independent BSS (IBSS) 112. In the IBSS 112, stations 106, 107, 108 may connect directly to each other without an access point. It is also called an ad hoc network. One of the stations may start the IBSS by advertising an SSID, similar to what an access point does in a BSS, and other stations may join the network. Since the IBSS 112 does not include an access point, when the stations 106, 107, 108 all are mobile stations, they cannot access a distribution system to constitute a self-contained network. It would be appreciated that there may be more IBSSs, which may separate from or overlap with one another.

Fig. 1C illustrates an environment 100C which includes a mesh basic service set (MBSS) 132. The MBSS 132, also referred to as a mesh network, may include a plurality of access points 123, 124, 125. In the example shown, the access point 123 is considered as a root access point (RAP) and connected to the distribution system 130, the access points 124, 125 are considered as an extender access point and connected to the access point 123 directly or via one or more intermediate extender access points (now shown). The access points 123, 124, 125 may communicate with each other via wireless backhaul link, and the root access point 123 may communicate with the distribution system 130 via an ethernet link. The access points 123, 124, 125 of the MBSS 132 may share the same SSID and BSSID. Stations can be connected to any one of the access points 123, 124, 125 and seamlessly roam from one access point to another with no need to re-establish the connection. Fig. 1C shows only one station 109 connected to the access point 124. In addition, the stations perceive all access points in the MBSS as one single access point and no adjustment is needed at the station end. It can improve security of the user data and significantly reduce the delay.

The IEEE 802.11 standards have achieved a significant evolution in terms of bandwidth capacity, escalating from 20 MHz in IEEE 802.11a to 320 MHz in IEEE 802.11be, in order to support extremely high throughput, reduce latencies and mitigate interference between radio signals. The expansion in bandwidth capability also leads to a reevaluation of channel allocation methodologies. IEEE 802.1bn has introduced a proposal for non-primary channel access (NPCA), which allows stations to temporarily utilize secondary channels when a primary channel of a basic service set (BSS) is occupied. The secondary channel is also referred to as NPCA primary channel, which is differentiated from the BSS primary channel. Fig. 2 illustrates an example of the NPCA.

Referring to Fig. 2, an access point of a BSS may operate over a wide bandwidth, e.g., 160 MHz, shown as "BSS bandwidth" in the figure, and a station in the BSS may operate at a smaller bandwidth, e.g., 20 MHz, shown as "BSS primary" in the figure. While the IEEE 802.11 standards have made tremendous progress in increasing the bandwidth capacity, each iteration has consistently incorporated a 20 MHz primary channel to ensure backward compatibility with older versions. Assuming a scenario where the station is also positioned in a coverage area of an overlapping BSS (OBSS) and there are ongoing transmissions in the OBSS on the BSS primary channel, the station may receive the OBSS transmissions on the BSS primary channel and determine that the BSS primary channel is busy through a clear channel assessment (CCA) operation or an enhanced distributed channel access (EDCA) procedure, for example. In such a case, the station may temporarily switch to an idle alternative/secondary channel and transmit and/or receive transmissions on the alternative/secondary channel. The alternative/secondary channel is also referred to as NPCA primary channel. This strategy can increase the chance of accessing the channel, which is crucial for low-latency traffic, and improve spectrum utilization.

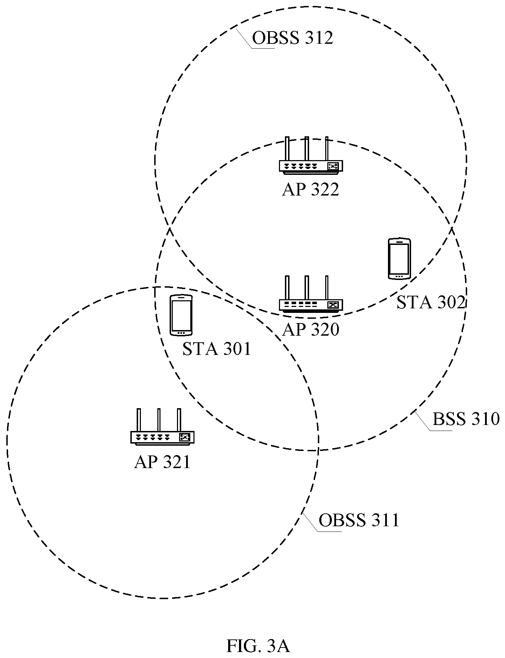

IEEE 802.11bn has agreed that a station shall switch to the NPCA primary channel when either the station receives on the BSS primary channel a physical (PHY) protocol data unit (PPDU) and/or a PHY-RXSTART.indication primitive for an High Efficiency (HE)/Extremely High Throughput (EHT)/Ultra High Reliability (UHR) PPDU from an OBSS or when the station receives on the BSS primary channel a PPDU including an initial response frame of a control frame exchange from the OBSS. Upon switching, the station may remain on the NPCA primary channel for an NPCA duration before switching back to the BSS primary channel. The NPCA duration is defined as an amount of time during which the station remains on the NPCA primary channel before switching back to the BSS primary channel. Given that a station is not able to detect and decode transmissions on both BSS and NPCA primary channels, and furthermore the NPCA duration may be different for multiple stations, a station is subject to deafness to the BSS primary channel when it resides on the NPCA primary channel and may lose medium synchronization when it switches back to the BSS primary channel after having resided on the NPCA primary channel for some time. Some examples of this issue are illustrated in Figs. 3A-4B.

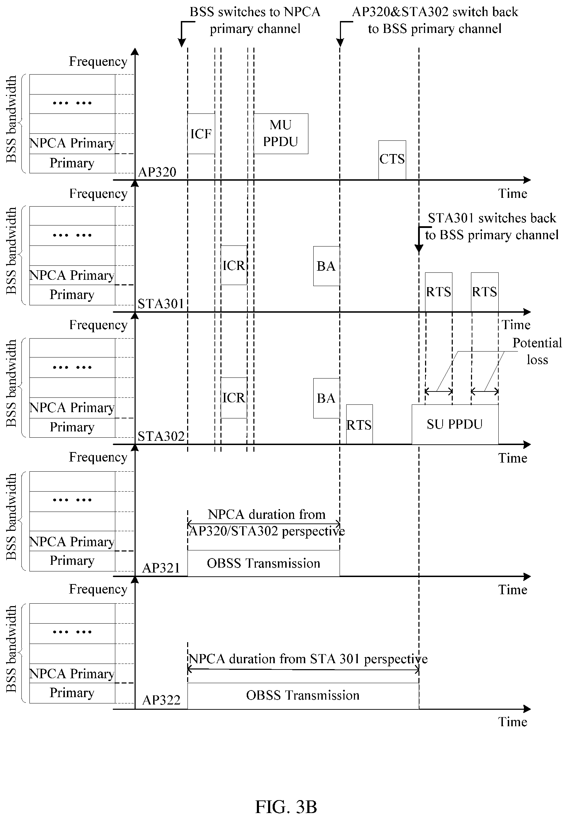

Referring to Fig. 3A, a BSS 310 includes an access point (AP) 320 and stations (STAs) 301, 302. The station 301 is also positioned in an overlapping BSS (OBSS) 311 that includes an access point 321, the access point 320 and the station 302 are also positioned in an OBSS 312 that includes an access point 322, and the stations 301, 302 are hidden from each other (i.e., cannot hear each other). Referring to Fig. 3B, it is assumed that the access points 321, 322 have OBSS transmissions on the BSS primary channel, and the OBSS transmission from the access point 322 is longer than that from the access point 321. The access point 320 and the stations 301, 302 of the BSS 310 may switch to an NPCA primary channel since the BSS primary channel is occupied by the OBSS transmissions. While residing on the NPCA primary channel, the access point 320 may transmit an initial control frame (ICF), e.g., a multi-user request to send (MU-RTS) frame, to the stations 301, 302, and the stations 301, 302 may respond to the access point 320 with an initial control response (ICR) frame, e.g., a clear to send (CTS) frame. After the ICF/ICR frames exchange, the access point 320 may transmit multi-user (MU) physical protocol data units (PPDUs) to the stations 301, 302, and the stations 301, 302 may respond to the access point 320 with a block acknowledgement (BA) frame to confirm successful receipt of the transmissions.

The access point 320 and the station 302 may switch back to the BSS primary channel when the OBSS transmission from the access point 322 is finished. It is worth noting that in the example shown in Fig. 3A, the access point 320 and the station 302 cannot hear the access point 321. Upon switching back to the BSS primary channel, the station 302 may acquire the right of channel access by RTS/CTS frames exchange and transmit single user (SU) PPDUs to the access point 320 on the BSS primary channel. The station 301 experiences a longer OBSS transmission from the access point 321 and it returns back to the BSS primary channel later than the access point 320 and the station 302. Since the station 301 is deaf on the BSS primary channel and does not know a transmission is still ongoing on the BSS primary channel, the station 301 will lose its medium synchronization when it returns to the BSS primary channel. For instance, as shown in Fig. 3B, the station 301 may succeed in a clear channel assessment (CCA) procedure and attempt to initiate new frame exchanges on the BSS primary channel by transmitting one or more RTS frames, which may cause potential loss of information at both the access point 320 and the station 302 as transmissions from/to the station 301 may overlap/collide with transmissions from/to the station 302.

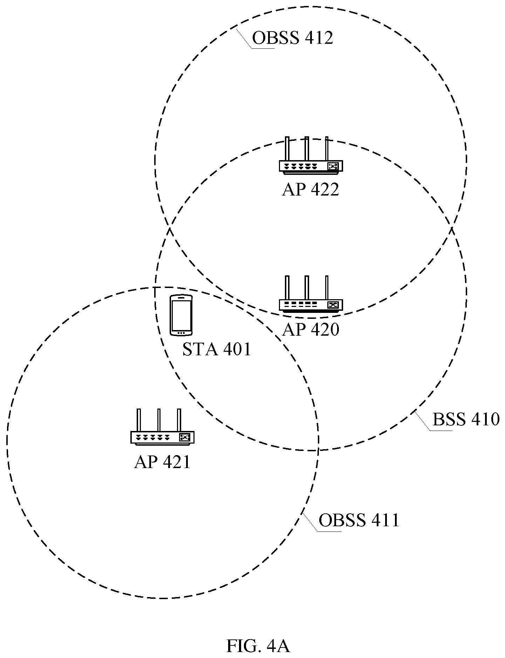

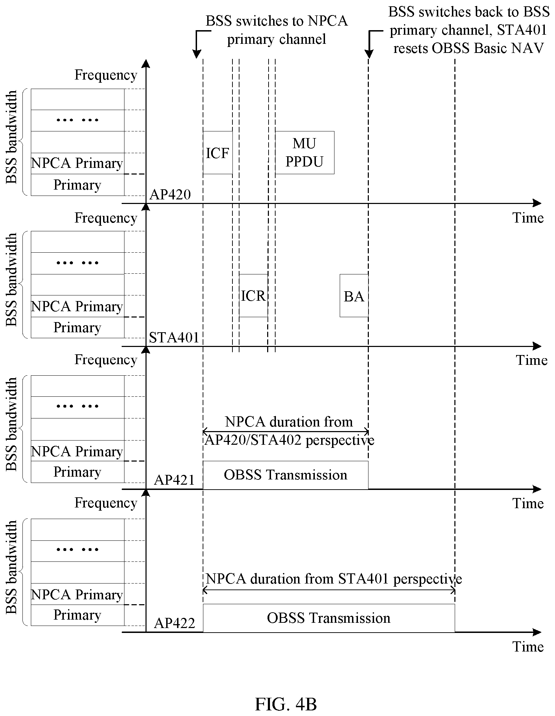

Figs. 4A, 4B illustrate another example of medium synchronization loss during NPCA. Referring to Fig. 4A, a BSS 410 includes an access point (AP) 420 and a station (STA) 401. The station 301 is also positioned in an overlapping BSS (OBSS) 411 that includes an access point 421, the access point 420 is also positioned in an OBSS 412 that includes an access point 422. Referring to Fig. 4B, it is assumed that the access points 421, 422 have OBSS transmissions on the BSS primary channel, and the OBSS transmission from the access point 422 is longer than that from the access point 421. Since the BSS primary channel is occupied by the OBSS transmissions, the access point 420 and the station 401 may switch to an NPCA primary channel and transmit/receive transmissions on the NPCA primary channel. For instance, the access point 420 may transmit an initial control frame (ICF), e.g., a multi-user request to send (MU-RTS) frame, to the station 401, and the station 401 may respond to the access point 420 with an initial control response (ICR) frame, e.g., a clear to send (CTS) frame. After the ICF/ICR frames exchange, the access point 420 may transmit multi-user (MU) physical protocol data units (PPDUs) to the station 401, and the station 401 may respond to the access point 420 with a block acknowledgement (BA) frame to confirm successful receipt of the transmissions.

The access point 420 and the station 401 may predict how long the OBSS transmission may last and how long they have to reside on the NPCA primary channel based on the OBSS transmissions they perceive. For instance, an OBSS frame may include a duration field indicating how long the OBSS transmission opportunity (TxOP) will last. The access point 420 and the station 401 may also set an OBSS basic network allocation vector (NAV) timer based on the duration field of the OBSS frame for virtual carrier sensing. In the example shown, as the OBSS transmission from the access point 422 is longer than that from the access point 421, the access point 420 and the station 401 have different understanding of the NPCA duration and they may indicate the NPCA duration of their own understanding in the ICF and/or ICR frames so that they can return back to the BSS primary channel at the same time. IEEE 802.11bn may decide in this matter that all devices in the BSS shall return to the BSS primary channel when the access point of the BSS decides to do so. It means that the station 401 has to return to the BSS primary channel when the access point 410 does so, and reset its OBSS basic NAV timer to zero while the OBSS transmission from the access point 422 is still ongoing. As a result, the station 401 will lose its medium synchronization when it returns to the BSS primary channel.

Since switch to the NPCA primary channel may be likely a frequent procedure, it would be beneficial to define a suitable procedure for a station to regain or maintain proper medium synchronization upon returning to the BSS primary channel. IEEE 802.11be has designed a medium access recovery procedure for multi-link operation (MLO) use cases. However, the medium access recovery procedure is designed for the MLO feature and therefore it is not suitable for the NPCA procedure. For example, the medium access recovery procedure is designed for multi-link devices (MLDs) which can independently operate on different links/channels, while in the NPCA procedure, theoretically all devices within a BSS synchronously switch from one channel to another.

Example embodiments of the present disclosure propose a medium access recovery procedure for non-primary channel access (NPCA). Some example embodiments provide one or more conditions that may trigger the medium access recovery procedure for an NPCA capable station which has enabled the NPCA feature. If none of the one or more conditions is satisfied, a station may determine not to trigger the medium access recovery procedure. Some example embodiments provide a set of possible actions/behaviors a station shall follow upon returning from an NPCA primary channel to a basic service set (BSS) primary channel in order to either regain medium synchronization, maintain medium synchronization, or help other stations get medium synchronization. Some example embodiments provide a set of possible actions/behaviors a station shall follow when returning to the BSS primary channel to determine whether it is allowed to switch to the NPCA primary channel again. The example embodiments of the present disclosure can ensure medium synchronization and prevent potential information loss when a station switches from one channel to another.

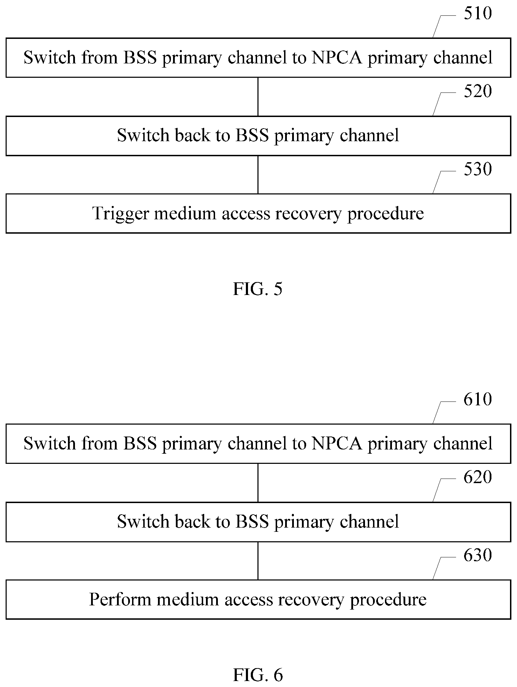

Fig. 5 illustrates a method for triggering a medium access recovery procedure for non-primary channel access (NPCA) according to an example embodiment of the present disclosure. The method may be performed by a station such as an access point (AP) station or a non-AP station described above with reference to Figs. 1A-4.

Referring to Fig. 5, the method may comprise switching from a basic service set (BSS) primary channel to an NPCA primary channel at 510 and switching back from the NPCA primary channel to the BSS primary channel at 520. For instance, an AP or non-AP station may operate at first on a primary channel in a BSS. If the BSS primary channel is occupied by an overlapping BSS (OBSS) or other transmissions, the station may detect through a clear channel assessment (CCA) operation that the BSS primary channel is busy and hence move to a secondary/non-primary channel to transmit and/or receive transmissions. The second/non-primary channel is also referred to as NPCA primary channel. In an example, the station may switch to the NPCA primary channel when it receives a physical protocol data unit (PPDU) and/or a PHY-RXSTART.indication primitive for an High Efficiency (HE)/Extremely High Throughput (EHT)/Ultra High Reliability (UHR) PPDU from the OBSS, or when it receives a PPDU including an initial response frame of a control frame exchange from the OBSS. In another example, the station may switch to the NPCA primary channel in a trigger-based mode. For instance, a non-AP station may receive a trigger frame, e.g., an initial control frame (ICF), from an associated access point indicating frequency-domain resources of the NPCA primary channel and an NPCA duration (i.e., time-domain resources). In response to the trigger frame, the station may switch from the BSS primary channel to the NPCA primary channel and reside on the NPCA primary channel for the NPCA duration.

The station may also set an OBSS basic network allocation vector (NAV) timer indicating how long the OBSS transmission will last. A station usually maintains two NAV timers for virtual carrier sensing: an intra-BSS NAV timer which may be set based on a duration field received from another station within the same BSS, and a basic NAV timer which may be set based on a duration field received from another station within a different BSS, i.e., an OBSS. The basic NAV timer is also referred to as OBSS basic NAV timer here. When the station receives a frame from an OBSS including a duration field indicating how long a transmission opportunity (TxOP) will last, the station may set or update its OBSS basic NAV timer based on the duration field.

The station may reside on the NPCA primary channel for a time period and then return to the BSS primary channel. In an example, the station may return to the BSS primary channel when the OBSS basic NAV timer is expired, i.e., counting down to zero, which indicates that the OBSS transmission overlapping the station is finished. In another example, the station may return to the BSS primary channel following an instruction received from the associated access point. For instance, when the NPCA duration received from the access point has elapsed, the station may return to the BSS primary channel. Upon returning to the BSS primary channel, the station may perform CCA operations to confirm that the BSS primary channel is idle before it transmits and/or receives transmissions on the BSS primary channel. However, due to the deafness to the BSS primary channel before the returning, potential transmissions initiated by hidden stations in the BSS, returning forced by the access point and/or other reasons, the station may lose the medium synchronization when it returns to the BSS primary channel.

Referring still to Fig. 5, the method may further comprise triggering, at 530, a medium access recovery procedure in response to switching back to the BSS primary channel. In an example, the station may trigger the medium access recovery procedure always/every time when it switches back to the BSS primary channel, in order to ensure medium synchronization and prevent potential loss of transmissions. In another example, the station may trigger the medium access recovery procedure when one or more conditions are satisfied, which will be discussed in detail below.

In an example, upon switching back to the BSS primary channel, the station may trigger the medium access recovery procedure if it resided on the NPCA primary channel for a time period that reaches or exceeds a predetermined threshold, called here NPCA dwelling time. For instance, when the station switches to the NPCA primary channel, it may start a countdown timer to measure the NPCA dwelling time. The timer is also referred to as NPCA dwelling timer here. The NPCA dwelling time may have a predetermined value that indicates the maximum amount of time a station can stay in the NPCA primary channel before it requires medium synchronization. Then when the station switches back to the BSS primary channel, if the NPCA dwelling timer has expired, the station may trigger the medium access recovery procedure. This is because the station resided on the NPCA primary channel for a long time period and other stations that switch back to the BSS primary channel earlier may have initiated new transmissions on the BSS primary channel. Hence the station needs to perform the medium access recovery procedure to regain medium synchronization. If the NPCA dwelling timer has not expired yet, the station may not trigger the medium access recovery procedure. This is because that the station resided on the NPCA primary channel for a short time period and other stations that switch back to the BSS primary channel earlier do not have enough time to initiate a new transmission on the BSS primary channel. Hence the station does not need to perform the medium access recovery procedure.

In an example, the medium access recovery procedure may not be triggered if the station has not been able to acquire a transmission opportunity (TxOP) and transmit an initial control frame (ICF) on the NPCA primary channel. If the station has acquired a transmission opportunity and transmitted an initial control frame in order to initiate new frame exchanges on the NPCA primary channel, the medium access recovery procedure may be triggered when the station switches back to the BSS primary channel.

In an example, the station may trigger the medium access recovery procedure if it receives an initial control response (ICR) frame from another AP or non-AP station in the BSS while residing on the NPCA primary channel. It can be determined based on the ICR frame that a transmission has been initiated by other stations in the BSS and hence when the station switches back to the BSS primary channel, the station may perform the medium access recovery procedure to regain medium synchronization and avoid potential collision with transmissions of other stations. If the station has not received an ICR frame while residing on the NPCA primary channel, the medium access recovery procedure may not be triggered.

As discussed above, a station may calculate/estimate an NPCA duration based on for example a duration field in frames received from an OBSS. The NPCA duration is defined as an amount of time the station shall be staying on the NPCA primary channel. Stations may calculate/estimate different NPCA duration values if they are overlapped with different OBSSs, and they may exchange the NPCA duration values with each other via ICF and ICR frames, for example. While residing on the NPCA primary channel, the station may follow the NPCA duration calculated by itself or the NPCA duration received from other stations in the BSS and, when the NPCA duration the station is following has elapsed, the station may switch back to the BSS primary channel. In an example, if a station realizes that the NPCA duration calculated by itself is longer than the NPCA duration it received from another AP or non-AP station in the BSS and the station switches back to the BSS primary channel based on the NPCA duration it received from the another station before the NPCA duration calculated by itself has elapsed, the station may trigger the medium access recovery procedure to regain the medium synchronization.

In an example, if the NPCA duration that the station is following (i.e., the time period the station resided on the NPCA primary channel) is longer than the NPCA dwelling time discussed above, and upon switching back to the BSS primary channel the station resets its OBSS basic NAV timer (i.e., the station switches back to the BSS primary channel before the OBSS basic NAV timer has expired), then the station may trigger the medium access recovery procedure to ensure medium synchronization. If the NPCA duration that the station is following is shorter than the NPCA dwelling time and upon switching back to the BSS primary channel the station does not reset its OBSS basic NAV timer (i.e., the station switches back to the BSS primary channel when the OBSS basic NAV timer has expired), the station may not trigger the medium access recovery procedure.

In an example, the station may set its OBSS basic NAV timer corresponding to the NPCA duration calculated by itself. If the station follows the NPCA duration received from other stations e.g., the associated access point and switches back to the BSS primary channel before the OBSS basic NAV timer has expired (i.e., the NPCA duration calculated by the station is longer than the NPCA duration received from the access point), the station may reset the OBSS basic NAV timer to zero because the station is led to think, by the NPCA duration received from the access point, that the BSS primary channel is idle. However, the station may realize that the OBSS transmission which has led to switch to the NPCA primary channel may be still ongoing because the OBSS basic NAV timer has not expired at the time when it switches back to the BSS primary channel. Therefore, if the station resets the OBSS basic NAV timer when it switches back to the BSS primary channel, the station may trigger the medium access recovery procedure to ensure medium synchronization. If the station does not reset the OBSS basic NAV timer when it switches back to the BSS primary channel, i.e., the OBSS basic NAV timer has expired when the station switches back to the BSS primary channel, the medium access recovery procedure may not be triggered.

In an example, transmissions on the NPCA primary channel may be performed in a trigger-based mode. For instance, a station may transmit a trigger frame, e.g., an initial control frame (ICF), to initiate a new frame exchange on the NPCA primary channel, and another station that receives the ICF frame may respond with an initial control response (ICR) frame to indicate that it is ready to receive a transmission on the NPCA primary channel. In an example, an access point may indicate in the ICF its own NPCA duration. If a non-AP station associated with the access point receives the ICF and realizes that the NPCA duration calculated by the non-AP station itself is longer than the NPCA duration received from the access point, and the non-AP station switches back to the BSS primary channel before the NPCA duration calculated by itself has elapsed, e.g., at the time when the NPCA duration received from the access point has elapsed, the non-AP station may decide to trigger the medium access recovery procedure. If the NPCA duration calculated by the non-AP station is shorter than the NPCA duration received from the access point, and the non-AP station switches back to the BSS primary channel after the NPCA duration calculated by itself has elapsed, the non-AP station may decide not to trigger the medium access recovery procedure.

Various conditions for triggering the medium access recovery procedure have been described above. By applying the conditions, the AP or non-AP stations may trigger the medium access recovery procedure when they are likely to lose medium synchronization upon switching back to the BSS primary channel from the NPCA primary channel, or not trigger the medium access recovery procedure when they are not likely to lose medium synchronization. It would be appreciated that the conditions may be applied alone or in any combination, which all fall within the protection scope defined by the claims and their equivalents.

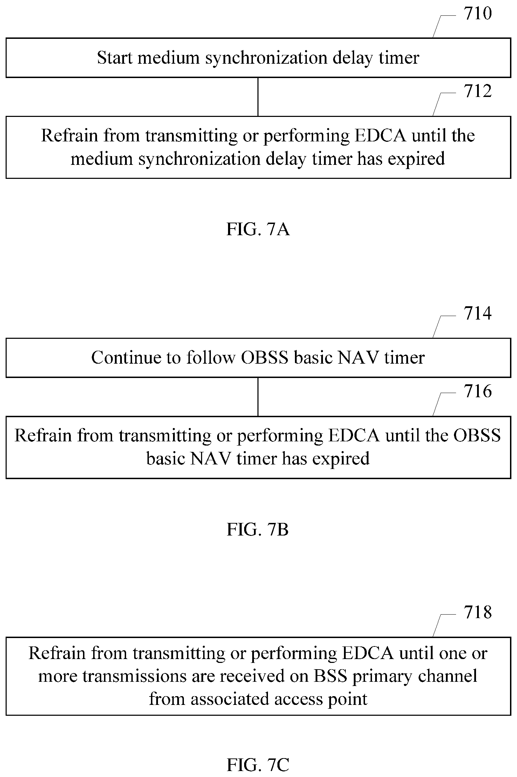

If the medium access recovery procedure is triggered at 530, the method may further comprise performing the medium access recovery procedure (not shown in Fig. 5), which will be described in detail below with reference to Figs. 6 and 7A-7D.

Fig. 6 illustrates a method for performing a medium access recovery procedure during non-primary channel access (NPCA) according to an example embodiment of the present disclosure. The method may be performed by a station such as an access point (AP) station or a non-AP station described above with reference to Figs. 1A-5.

Referring to Fig. 6, the method may comprise switching from a basic service set (BSS) primary channel to an NPCA primary channel at 610, switching back from the NPCA primary channel to the BSS primary channel at 620, and performing a medium access recovery procedure in response to switching back to the BSS primary channel at 630. The operations 610, 620 may be similar to the operations 510, 520 discussed above with respect to Fig. 5, respectively, and a repetitive description thereof is omitted here for convenience.

In an example, before performing the medium access recovery procedure at 630, the station may decide to trigger the medium access recovery procedure based on one or more conditions. The one or more conditions for triggering the medium access recovery procedure have been described above with respect to Fig. 5, and a repetitive description thereof is omitted here for convenience.

As discussed above, when a station returns from the NPCA primary channel to the BSS primary channel, it may lose medium synchronization due to various reasons such as deafness to the BSS primary channel when residing on the NPCA primary channel, potential transmissions initiated by hidden stations in the BSS, and returning forced/controlled by the access point. In the example embodiment, the station may perform the medium access recovery procedure to regain or maintain medium synchronization, or help other stations regain or maintain medium synchronization.

One or more actions that may be applied for the medium access recovery procedure will be described below with reference to Figs. 7A-7D. Referring to Fig. 7A first, in an example, the medium access recovery procedure may comprise starting a medium synchronization delay timer at 710. The medium synchronization delay timer may be equivalent to a legacy *MediumSyncDelay* timer that is defined for the multi-link operation (MLO) use cases, or it may be a new dedicated timer, called here *NPCAMediumSyncDelay* timer. The medium synchronization delay timer may start to count down at a time when the station has switched back to the BSS primary channel. In an example, the medium synchronization delay timer may be a single timer that is shared by multiple enhanced distributed channel access functions (EDCAFs) of the station. If there is an ongoing medium synchronization delay timer that was previously started and that has not yet elapsed, the station may not start a new medium synchronization delay timer.

The medium access recovery procedure may further comprise, at 712, refraining from transmitting or performing an enhanced distributed channel access (EDCA) procedure until the medium synchronization delay timer has expired. For example, referring to Fig. 3B and Fig. 4B, if the station 301 is prohibited from transmitting or performing (e.g., resuming or starting) the EDCA procedure within a period of time from its switching back to the BSS primary channel (i.e., before the medium synchronization delay timer has expired), the potential loss of information caused by intra-BSS (Fig. 3B) or inter-BSS (Fig. 4B) interference associated with the transmission of the station 301 can be avoided. When or while the medium synchronization delay timer has expired, the station 301 can monitor new frame exchanges initiated by other stations in the BSS and hence regain medium synchronization. Therefore, in an example, the station may be allowed to transmit or perform (e.g., resume or start) the EDCA procedure when the medium synchronization delay timer has expired.

Fig. 7B illustrates another example of the medium access recovery procedure. In the example, it is assumed that the station follows an NPCA duration received from another associated station e.g. the associated access point and switches from the NPCA primary channel to the BSS primary channel. Upon switching back to the BSS primary channel, if the OBSS basic NAV timer for the OBSS transmission on the BSS primary channel which has caused the station to switch to the NPCA primary channel has not expired yet, the station may not reset the OBSS basic NAV timer, but instead continue to follow the OBSS basic NAV timer at 714. By monitoring the OBSS basic NAV timer, the station can realize the OBSS transmission on the BSS primary channel which has caused the station to switch to the NPCA primary channel may be still ongoing and hence, at 716, the station may refrain from transmitting or performing (e.g., resuming or starting) an EDCA procedure, until the OBSS basic NAV timer has expired. In an example, if the station has started a medium synchronization delay timer as discussed above, the station may be prohibited from transmitting or performing the EDCA procedure until both the OBSS basic NAV timer and the medium synchronization delay timer have expired.

Fig. 7C illustrates another example of the medium access recovery procedure. In the example, assuming that the medium access recovery procedure is triggered at a non-AP station when the non-AP station switches from the NPCA primary channel to the BSS primary channel, the non-AP station may, at 718, refrain from transmitting or performing (e.g., resuming or starting) an EDCA procedure until it receives a transmission from its associated access point on the BSS primary channel. The transmission may comprise one or more of a CTS-to-self frame, a RTS frame, a MU-RTS frame, an initial control frame or trigger frame such as a buffer status report poll (BSRP) frame, or a management frame such as a beacon frame or a probe frame. Upon receiving one or more of such frames, the non-AP station may do medium synchronization on the BSS primary channel and it may transmit or perform the EDCA procedure on the BSS primary channel. In an example, if the non-AP station has started a medium synchronization delay timer as discussed above, the non-AP station may be not allowed to transmit or perform the EDCA procedure until the medium synchronization delay timer has expired. Alternatively or additionally, if the non-AP station does not reset the OBSS basic NAV timer to zero upon switching back to the BSS primary channel, the non-AP station may be not allowed to transmit or perform the EDCA procedure until the OBSS basic NAV timer has expired.

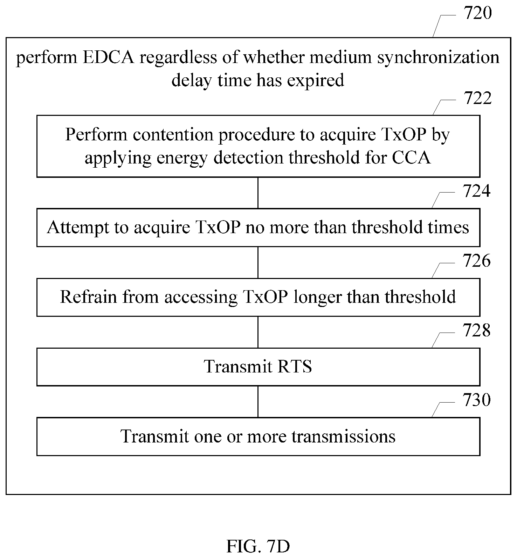

Fig. 7D illustrates another example of the medium access recovery procedure. In the example, the station may, at 720, perform the EDCA procedure regardless of whether or not the medium synchronization delay timer has expired. Even if the medium synchronization delay timer has not expired, the station may regain or maintain medium synchronization by performing one or more actions discussed below in the EDCA procedure. Referring to Fig. 7D, the EDCA procedure may comprise performing, at 722, a contention procedure to acquire a transmission opportunity (TxOP) on the BSS primary channel by applying an energy detection (ED) threshold for clear channel assessment (CCA). The ED threshold may be equivalent to a legacy *dot11MSDOFDMEDthreshold* that is defined for the medium access recovery procedure in the multi-link operation (MLO) use cases, or it may be a new dedicated threshold, called here *dot11NPCAthreshold.* The ED threshold may have a smaller value than that configured for a normal CCA operation, i.e., a CCA operation performed when the medium synchronization is maintained. As the ED threshold has a smaller value, the station can detect transmissions from hidden stations in the BSS which the station cannot hear if a higher ED threshold is used. The station can also detect OBSS transmissions on the BSS primary channel. The station would not initiate new frame exchanges on the BSS primary channel if it detects that the BSS primary channel is busy.

In an example, the station may, at 724, attempt to acquire the transmission opportunity (TxOP) no more than a threshold number of times. The threshold may be equivalent to a legacy *dot11MSDTXOPMax* threshold that is configured for the multi-link operation (MLO), or it may be a new dedicated threshold, called here *dot11NPCATXOPMax.* The threshold indicates the maximum number of TxOPs that a station is allowed to attempt to initiate while the medium synchronization delay timer is running at the station.

In an example, the station may, at 726, refrain from accessing a transmission opportunity (TxOP) longer than a predefined threshold. In other words, the station may access a TxOP if the TxOP is shorter than the threshold. It is assumed that the station may have lost medium synchronization and may not exactly know whether the BSS primary channel is busy with hidden node transmissions or actually occupied by OBSS transmissions. The station is allowed to perform transmissions with a limited length in order to avoid or reduce impacts on OBSS transmissions or hidden node transmissions.

In an example, if the station is a non-AP station, it may, at 728, transmit an RTS frame to its associated access point. The access point is aware of transmissions in the BSS and, if the BSS primary channel is idle, it may respond to the station with a CTS frame to allow the station to access the BSS primary channel. If there are hidden node transmissions on the BSS primary channel, the access point may not respond to the station, and the station is not allowed to access the BSS primary channel.

In an example, if the station is an AP station, it may, at 730, transmit one or more transmissions such as a CTS-to-self frame, an RTS frame, a MU-RTS frame, an initial control frame or trigger frame e.g. a buffer status report poll (BSRP) frame, or a management frame e.g. a beacon frame or a probe frame. By doing so, the access point can help stations in the BSS regain medium synchronization.

As discussed above, a station may perform one or more of the actions 722-730 during the EDCA procedure, not necessarily all the actions 722-730. For example, a non-AP station may perform the actions 722 and 728, an AP station may perform the actions 722 and 730. The actions 724, 726 may be applied either at the non-AP station or the AP station. In an example, the actions 722-730 may also be applied if the EDCA procedure is performed when the medium synchronization delay timer has expired.

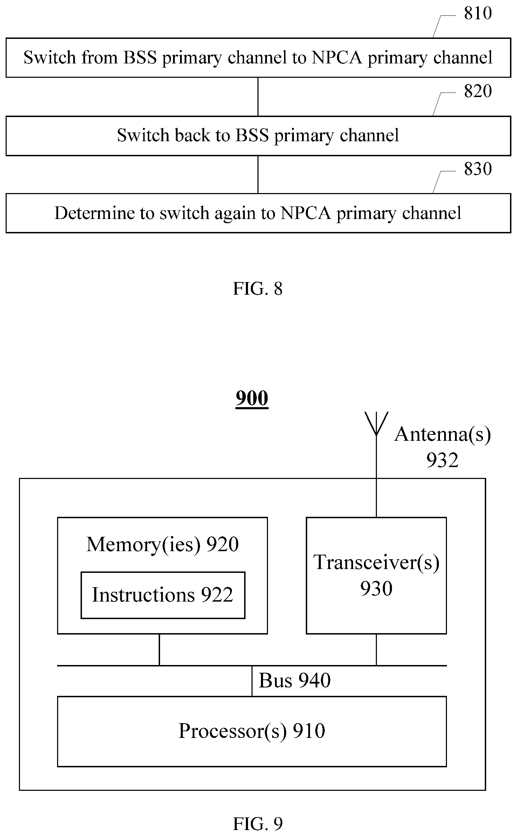

Fig. 8 illustrates a method for non-primary channel access (NPCA) according to an example embodiment of the present disclosure. The method may be performed by a station such as an access point (AP) station or a non-AP station described above with reference to Figs. 1A-7D.

Referring to Fig. 8, the method may comprise switching from a basic service set (BSS) primary channel to an NPCA primary channel at 810, switching back from the NPCA primary channel to the BSS primary channel at 820, and determining to switch again to the NPCA primary channel when one or more conditions are satisfied at 830. The operations 810, 820 may be similar to the operations 510, 520 discussed above with respect to Fig. 5, respectively, and a repetitive description thereof is omitted here for convenience.

In some examples, before determining to switch again to the NPCA primary channel at 830, the station may trigger and perform a medium access recovery procedure, which have been described above with respect to Figs. 5-7D and a repetitive description thereof is omitted here for convenience. In some other examples, the station may not trigger or perform the medium access recovery procedure after switching back to the BSS primary channel and before determining to switch again to the NPCA primary channel

In some examples, after switching back to the BSS primary channel from the NPCA primary channel, the station may determine to switch again to the NPCA primary channel if the switching again to the NPCA primary channel is triggered before a first timer expires. In an example, the first timer may start to count down at a time when the station has switched to the NPCA primary channel at 810 and measure a period of time called here NPCA dwelling time. The first timer is also referred to as NPCA dwelling timer. If the switching again to the NPCA primary channel is triggered before the NPCA dwelling timer expires, the station resided on the NPCA primary channel before switching back to the BSS primary channel less than the NPCA dwelling time and the station did not trigger a medium access recovery procedure. Hence the station is allowed to switch again to the NPCA primary channel.

In another example, the first timer may start to count down at a time when the station has switched back to the BSS primary channel at 820 and measure a minimum period of time for initiation of a new frame exchange. If the switching again to the NPCA primary channel is triggered before the first timer has expired, the station is allowed to switch again to the NPCA primary channel because no frame exchange is initiated on the NPCA primary channel.

In some examples, after switching back to the BSS primary channel from the NPCA primary channel, the station may determine to switch again to the NPCA primary channel if the switching again to the NPCA primary channel is triggered after a second timer expires. The second timer may start to count down at a time when the station has switched back to the BSS primary channel. As an option, the second timer may be equivalent to the medium access recovery delay timer discussed above. The station is not allowed to switch again to the NPCA primary channel before the second timer expires. It can prevent frequent switching from one channel to another.

In some examples, a medium access recovery procedure may be triggered when the station switches back to the BSS primary channel from the NPCA primary channel. If a condition for switching again to the NPCA primary channel is satisfied, the station may determine to switch again to the NPCA primary channel when the triggered medium access recovery procedure has been performed. As the medium access recovery procedure has been described above with reference to Figs. 7A-7D, a repetitive description thereof is omitted here for convenience.

Fig. 9 illustrates an apparatus 900 according to an example embodiment of the present disclosure. The apparatus 900 may be implemented as at least a part of an AP station or a non-AP station discussed above.

Referring to Fig. 9, the apparatus 900 may comprise one or more processors 910, one or more memories 920 and one or more transceivers 930 interconnected through a bus system 940. The bus system 940 may comprise address, data, and/or control buses that include any interconnection mechanism such as series of lines on a motherboard or integrated circuit, fiber, optics or other optical communication equipment, and the like. Each of the one or more transceivers 930 may comprise a receiver and a transmitter (not shown), which are connected to one or more antennas 932. The apparatus 900 may wirelessly communicate with other devices through the one or more antennas 932. If the apparatus 900 is implemented as an access point, it may also connect to a router device via wired ethernet. The one or more memories 920 may include computer program code or instructions 922. The one or more memories 920 and the computer program code/instructions 922 may be configured to, when executed by the one or more processors 910, cause the apparatus 900 to perform operations and methods described above.

The one or more processors 910 discussed above may be of any appropriate type that is suitable for the local technical network, and may include one or more of general purpose processors, special purpose processor, microprocessors, a digital signal processor (DSP), one or more processors in a processor based multi-core processor architecture, as well as dedicated processors such as those developed based on Field Programmable Gate Array (FPGA) and Application Specific Integrated Circuit (ASIC). The one or more processors 910 may be configured to control other elements of the apparatus and operate in cooperation with them to implement the operations and methods discussed above.

The one or more memories 920 may include at least one storage medium in various forms, such as a volatile memory and/or a non-volatile memory. The volatile memory may include but is not limited to, for example, a random-access memory (RAM) or a cache. The non-volatile memory may include but not limited to for example a read only memory (ROM), a hard disk, a flash memory, and the like. Further, the one or more memories 920 may include but not limited to an electric, a magnetic, an optical, an electromagnetic, an infrared, or a semiconductor system, apparatus, or device or any combination of the above.

It would be understood that blocks in the drawings may be implemented in various manners, including software, hardware, firmware, or any combination thereof. In some embodiments, one or more blocks may be implemented using software and/or firmware, for example, machine-executable instructions stored in the storage medium. In addition to or instead of machine-executable instructions, parts or all of the blocks in the drawings may be implemented, at least in part, by one or more hardware logic components. For example, and without limitation, illustrative types of hardware logic components that can be used include Field-Programmable Gate Arrays (FPGAs), Application-Specific Integrated Circuits (ASICs), Application-Specific Standard Products (ASSPs), System-on-Chip systems (SOCs), Complex Programmable Logic Devices (CPLDs), etc.

In some example embodiments, at least some of the methods and operations described herein may be carried out by an apparatus comprising means for carrying out at least some of the described methods and operations. Means for performing the methods and operations as disclosed herein may include software and/or hardware components of the apparatus. For example, the at least one processor, the at least one memory, and the computer program code/instructions may form means for carrying out the methods and operations as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

Some exemplary embodiments further provide computer readable instructions which, when executed by an apparatus, may cause the apparatus to perform the methods and operations described above. The computer readable instructions for carrying out the methods and operations of the example embodiments may be written in any combination of one or more programming languages. The computer readable instructions may be provided to one or more processors or controllers of a general purpose computer, special purpose computer, or other programmable data processing apparatus, such that the computer readable instructions, when executed by the processor or controller, cause the functions/operations specified in the flowcharts and/or block diagrams to be implemented. The computer readable instructions may execute entirely on a machine, partly on the machine, as a stand-alone software package, partly on the machine and partly on a remote machine or entirely on the remote machine or server.

Some exemplary implementations further provide a computer program product or a non-transitory computer readable medium having the program instructions stored therein. The term "non-transitory," as used herein, is a limitation of the medium itself (i.e., tangible, not a signal) as opposed to a limitation on data storage persistency (e.g., RAM vs. ROM). The non-transitory computer readable medium may be any tangible medium that may contain, or store a program for use by or in connection with an instruction execution system, apparatus, or device. The machine readable medium may be a machine readable signal medium or a machine readable storage medium. A machine readable medium may include but is not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

As explained above and reiterated below, the present disclosure comprises, without limitation, the following example implementations.

An example implementation provides an apparatus, comprising means for switching from a BSS primary channel to an NPCA primary channel in response to the BSS primary channel being occupied by an OBSS transmission, means for switching back to the BSS primary channel after residing on the NPCA primary channel for a time period, and means for triggering a medium access recovery procedure in response to switching back to the BSS primary channel.

An example implementation provides a computer readable medium, comprising instructions that, when executed by an apparatus, cause the apparatus at least to perform: switching from a BSS primary channel to an NPCA primary channel in response to the BSS primary channel being occupied by an OBSS transmission, switching back to the BSS primary channel after residing on the NPCA primary channel for a time period, and triggering a medium access recovery procedure in response to switching back to the BSS primary channel.

In an example, the medium access recovery procedure is triggered based on one or more of the following conditions: the time period when residing on the NPCA primary channel reaches or exceeds a predetermined threshold; a transmission opportunity is acquired and an initial control frame is transmitted on the NPCA primary channel; or an initial control response is received on the NPCA primary channel from another device.

In an example, the medium access recovery procedure is triggered based on that a first NPCA duration calculated at the apparatus is longer than a second NPCA duration received from another apparatus and the switching back to the BSS primary channel takes place before the first NPCA duration has elapsed.

In an example, the medium access recovery procedure is triggered based on one or more of the following conditions: an NPCA duration that the apparatus is following is longer than a predetermined threshold; or an OBSS basic network allocation vector timer of the apparatus is reset upon switching back to the BSS primary channel.

In an example, the non-primary channel access is operated in a trigger-based mode, the apparatus is a non-access point station, a first NPCA duration calculated by the non-access point station is longer than a second NPCA duration indicated in an initial control frame received from an access point associated with the non-access point station, and the medium access recovery procedure is triggered based on that the switching back to the BSS primary channel takes place before the first NPCA duration has elapsed.

An example implementation provides an apparatus, comprising means for switching from a BSS primary channel to an NPCA primary channel in response to the BSS primary channel being occupied by an OBSS transmission, means for switching back to the BSS primary channel after residing on the NPCA primary channel for a time period, and means for performing a medium access recovery procedure in response to switching back to the BSS primary channel.

An example implementation provides a computer readable medium, comprising instructions that, when executed by an apparatus, cause the apparatus at least to perform: switching from a BSS primary channel to an NPCA primary channel in response to the BSS primary channel being occupied by an OBSS transmission, switching back to the BSS primary channel after residing on the NPCA primary channel for a time period, and performing a medium access recovery procedure in response to switching back to the BSS primary channel.

In an example, the medium access recovery procedure comprises starting a medium synchronization delay timer.

In an example, the medium synchronization delay timer starts to count down from a time when the apparatus has switched back to the BSS primary channel.

In an example, the medium synchronization delay timer is shared by multiple enhanced distributed channel access functions of the apparatus.

In an example, the medium synchronization delay timer is not started based on that a previous medium synchronization delay timer of the apparatus has not expired.

In an example, the medium access recovery procedure comprises continuing to follow an OBSS basic NAV timer for the OBSS transmission on the BSS primary channel after switching back to the BSS primary channel.

In an example, the apparatus is a non-access point station, and the non-access point station is prohibited from transmitting or performing an EDCA procedure until the OBSS basic NAV timer has expired.

In an example, the apparatus is a non-access point station, the medium access recovery procedure comprises: refraining from transmitting or performing an EDCA procedure until the apparatus receives at least one of the following transmissions from an associated access point on the BSS primary channel: a clear to send-to-self frame, a request to send frame, a multi-user request to send frame, an initial control frame, a trigger frame, a beacon frame, or a probe frame.

In an example, the medium access recovery procedure comprises: refraining from transmitting or performing an enhanced distributed channel access procedure until the medium synchronization delay timer has expired.

In an example, the medium access recovery procedure comprises: performing an enhanced distributed channel access procedure regardless of whether the medium synchronization delay timer has expired.

In an example, the enhanced distributed channel access procedure is performed by applying one or more of the following actions: performing a contention procedure to acquire a transmission opportunity on the BSS primary channel by applying an energy detection threshold predefined or configured for the medium access recovery procedure for clear channel assessment; attempting to acquire the transmission opportunity no more than a threshold number of times; refraining from accessing a transmission opportunity longer than a predefined or configured threshold; transmitting a request to send frame to an associated access point in case the apparatus is a non-access point station; or transmitting at least one of the following transmissions in case the apparatus is an access point: a clear to send-to-self frame, a request to send frame, a multi-user request to send frame, an initial control frame, a trigger frame, a beacon frame, or a probe frame.

An example implementation provides an apparatus, comprising means for switching from a BSS primary channel to an NPCA primary channel in response to the BSS primary channel being occupied by an OBSS transmission, means for switching back to the BSS primary channel after residing on the NPCA primary channel for a time period, and means for determining to switch again to the NPCA primary channel in response to one or more of the following conditions: the switching again to the NPCA primary channel is triggered before a first timer expires, the switching again to the NPCA primary channel is triggered after a second timer expires, or a medium access recovery procedure has been performed in response to the switching back to the BSS primary channel.

An example implementation provides a computer readable medium, comprising instructions that, when executed by an apparatus, cause the apparatus at least to perform: switching from a BSS primary channel to an NPCA primary channel in response to the BSS primary channel being occupied by an OBSS transmission; switching back to the BSS primary channel after residing on the NPCA primary channel for a time period; and determining to switch again to the NPCA primary channel in response to one or more of the following conditions: the switching again to the NPCA primary channel is triggered before a first timer expires, the switching again to the NPCA primary channel is triggered after a second timer expires, or a medium access recovery procedure has been performed in response to the switching back to the BSS primary channel.

In an example, the first timer starts to count down from a time when the apparatus has switched to the NPCA primary channel.

In an example, no medium access recovery procedure is triggered when switching back to the BSS primary channel based on that the apparatus switches back to the BSS primary channel before the first timer expires.

In an example, the first timer starts to count down from a time when the apparatus has switched back to the BSS primary channel.

In an example, the second timer is a medium synchronization delay timer that is started during the medium access recovery procedure.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in a language that is specific to structural features and/or method actions, it is to be understood the subject matter defined in the appended claims is not limited to the specific features or actions described above. On the contrary, the above-described specific features and actions are disclosed as an example of implementing the claims.

## Claims

1. An apparatus, comprising:
at least one processor; and
at least one memory storing instructions that, when executed by the at least one processor, cause the apparatus at least to perform:
switching from a basic service set, BSS, primary channel to a non-primary channel access, NPCA, primary channel in response to the BSS primary channel being occupied by an overlapping basic service set, OBSS, transmission;
switching back to the BSS primary channel after residing on the NPCA primary channel for a time period; and
performing a medium access recovery procedure in response to switching back to the BSS primary channel.

2. The apparatus of claim 1, wherein the medium access recovery procedure comprises:
starting a medium synchronization delay timer.

3. The apparatus of claim 2, wherein the medium synchronization delay timer starts to count down from a time when the apparatus has switched back to the BSS primary channel.

4. The apparatus of claim 2, wherein the medium synchronization delay timer is shared by multiple enhanced distributed channel access functions of the apparatus.

5. The apparatus of claim 2, wherein the medium synchronization delay timer is not started based on that a previous medium synchronization delay timer of the apparatus has not expired.

6. The apparatus of claim 1, wherein the medium access recovery procedure comprises:
continuing to follow an OBSS basic network allocation vector timer for the OBSS transmission on the BSS primary channel after switching back to the BSS primary channel.

7. The apparatus of claim 6, wherein the apparatus is a non-access point station, and the non-access point station is prohibited from transmitting or performing an enhanced distributed channel access procedure until the OBSS basic network allocation vector timer has expired.

8. The apparatus of claim 1, wherein the apparatus is a non-access point station, the medium access recovery procedure comprises:
refraining from transmitting or performing an enhanced distributed channel access procedure until the apparatus receives at least one of the following transmissions from an associated access point on the BSS primary channel:
a clear to send-to-self frame;
a request to send frame;
a multi-user request to send frame;
an initial control frame;
a trigger frame;
a beacon frame; or
a probe frame.

9. The apparatus of claim 2, wherein the medium access recovery procedure comprises:
refraining from transmitting or performing an enhanced distributed channel access procedure until the medium synchronization delay timer has expired.

10. The apparatus of claim 2, wherein the medium access recovery procedure comprises:
performing an enhanced distributed channel access procedure regardless of whether the medium synchronization delay timer has expired.

11. The apparatus of claim 10, wherein the enhanced distributed channel access procedure is performed by applying one or more of the following actions:
performing a contention procedure to acquire a transmission opportunity on the BSS primary channel by applying an energy detection threshold predefined or configured for the medium access recovery procedure for clear channel assessment;
attempting to acquire the transmission opportunity no more than a threshold number of times;
refraining from accessing a transmission opportunity longer than a predefined or configured threshold;
transmitting a request to send frame to an associated access point in case the apparatus is a non-access point station; or
transmitting at least one of the following transmissions in case the apparatus is an access point:
a clear to send-to-self frame;
a request to send frame;
a multi-user request to send frame;
an initial control frame;
a trigger frame;
a beacon frame; or
a probe frame.

12. A method, comprising:
switching, by an apparatus, from a basic service set, BSS, primary channel to a non-primary channel access, NPCA, primary channel in response to the BSS primary channel being occupied by an overlapping basic service set, OBSS, transmission;
switching back to the BSS primary channel after residing on the NPCA primary channel for a time period; and
performing a medium access recovery procedure in response to switching back to the BSS primary channel.

13. The method of claim 12, wherein the medium access recovery procedure comprises:
starting a medium synchronization delay timer at a time when the apparatus has switched back to the BSS primary channel.

14. The method of claim 13, wherein the medium synchronization delay timer is shared by multiple enhanced distributed channel access functions of the apparatus.

15. The method of claim 12, wherein the medium access recovery procedure comprises:
continuing to follow an OBSS basic network allocation vector timer for the OBSS transmission on the BSS primary channel after switching back to the BSS primary channel.

16. The method of claim 15, wherein the apparatus is a non-access point station, and the non-access point station is prohibited from transmitting or performing an enhanced distributed channel access procedure until the OBSS basic network allocation vector timer has expired.

17. The method of claim 12, wherein the apparatus is a non-access point station, the medium access recovery procedure comprises:
refraining from transmitting or performing an enhanced distributed channel access procedure until the apparatus receives at least one of the following transmissions from an associated access point on the BSS primary channel:
a clear to send-to-self frame;
a request to send frame;
a multi-user request to send frame;
an initial control frame;
a trigger frame;
a beacon frame; or
a probe frame.

18. The method of claim 13, wherein the medium access recovery procedure comprises:
refraining from transmitting or performing an enhanced distributed channel access procedure until the medium synchronization delay timer has expired.

19. The method of claim 13, wherein the medium access recovery procedure comprises:
performing an enhanced distributed channel access procedure regardless of whether the medium synchronization delay timer has expired.

20. The method of claim 19, wherein the enhanced distributed channel access procedure is performed by applying one or more of the following actions:
performing a contention procedure to acquire a transmission opportunity on the BSS primary channel by applying an energy detection threshold predefined or configured for the medium access recovery procedure for clear channel assessment;
attempting to acquire the transmission opportunity no more than a threshold number of times;
refraining from accessing a transmission opportunity longer than a predefined or configured threshold;
transmitting a request to send frame to an associated access point in case the apparatus is a non-access point station; or
transmitting at least one of the following transmissions in case the apparatus is an access point:
a clear to send-to-self frame;
a request to send frame;
a multi-user request to send frame;
an initial control frame;
a trigger frame;
a beacon frame; or
a probe frame.
